Europäisches Patentamt

European Patent Office

Office européen des brevets

(19)

(11) Numéro de publication: **0 088 013**
**B1**

(12) **FASCICULE DE BREVET EUROPEEN**

(45) Date de publication du fascicule du brevet: **20.11.86**

(51) Int. Cl.⁴: $C\ 08\ F\ 8/28$

(21) Numéro de dépôt: **83400371.7**

(22) Date de dépôt: **23.02.83**

(54) Procédé de préparation du polyvinylbutyral.

(30) Priorité: **23.02.82 FR 8202918**

(43) Date de publication de la demande:
**07.09.83 Bulletin 83/36**

(45) Mention de la délivrance du brevet:
**20.11.86 Bulletin 86/47**

(84) Etats contractants désignés:
**BE DE FR GB IT LU NL SE**

(56) Documents cités:
**FR-A-1 314 959**
**FR-A-2 401 941**
**GB-A- 873 263**

(73) Titulaire: **SAINT-GOBAIN VITRAGE**
**Les Miroirs 18, avenue d'Alsace**
**F-92400 Courbevoie (FR)**

(72) Inventeur: **Degeilh, Robert**
**29 route de Versailles**
**F-78600 Le Port-Marly (FR)**

(74) Mandataire: **Muller, René et al**
**SAINT-GOBAIN RECHERCHE 39, quai Lucien Lefranc**
**F-93304 Aubervilliers (FR)**

Courier Press, Leamington Spa, England.

EP 0 088 013 B1

## Description

L'invention concerne un procédé de préparation du polyvinylbutyral et les produits fabriqués par la mise en oeuvre de ce procédé.

Le polyvinylbutyral est généralement obtenu par une réaction de condensation entre l'aldéhyde butyrique et l'alcool polyvinylique. En faisant varier les conditions de mise en oeuvre de la réaction, les proportions des composés de départ et le poids moléculaire de l'alcool polyvinylique, ainsi qu'en incorporant divers adjuvants et plastifiants il est possible de faire varier dans une très large mesure les propriétés du produit final.

Pour l'application à la réalisation de vitrages feuilletés comprenant au moins une feuille de polyvinylbutyral, les propriétés désirées sont notamment:

— le fluage en compression de la feuille de polyvinylbutyral,
— la résistance aux chocs du vitrage feuilleté comprenant une telle feuille de polyvinylbutyral en tant qu'intercalaire,
— la force d'adhérence du polyvinylbutyral aux feuilles de verre du vitrage feuilleté (Pummel test),
— la transparence du vitrage feuilleté, c'est-à-dire l'absence de trouble ou turbidité,
— la résistance à l'humidité du vitrage feuilleté.

Certains procédés connus de synthèse du polyvinylbutyral permettent de satisfaire à l'une ou l'autre des exigences ci-dessus mais non pas à leur ensemble.

On a proposé dans la publication de brevet français 2 401 941 un procédé de préparation du polyvinylbutyral permettant d'agir à volonté sur une, plusieurs ou la totalité des propriétés énumérées ci-dessus, la résine préparée pouvant se prêter en outre à l'emploi de plastifiants beaucoup moins coûteux que ceux de la technique usuelle.

Selon ce procédé, on place la totalité d'une solution aqueuse de 8 à 15% en poids d'alcool polyvinylique dans un réacteur, on incorpore un catalyseur acide et un émulsifiant et on introduit progressivement en 30 minutes l'aldéhyde butyrique alors que le mélange initial est maintenu sous agitation entre 5 et 12°C.

Après addition de l'aldéhyde butyrique, le mélange résultant est maintenu sous agitation pendant une durée supérieure à 30 minutes à une température de 8 à 15°C, puis la température du mélange est ensuite élevée jusqu'à une valeur comprise entre 60 et 80°C en un laps de temps compris entre une heure et demie et 4 heures. On incorpore ensuite une base dans le mélange jusqu'à obtention d'un pH compris entre 9 et 11 et on maintient la température entre 60 et 80°C pendant une durée supérieure à un quart d'heure. Le polyvinylbutyral précipité est séparé du mélange et on obtient ainsi une poudre très fine avec un taux d'OH déterminé.

La feuille de polyvinylbutyral plastifiée avec un plastifiant adéquat présente les propriétés nécessaires et notamment un fluage satisfaisant pour pouvoir être utilisée dans les vitrages feuilletés. Néanmoins on a cherché à améliorer ce fluage.

On connait encore d'après le brevet français 1 314 959 un procédé de fabrication du polyvinylbutyral, selon lequel on introduit dans un réacteur contenant de l'eau à 90°C, durant 75 minutes simultanément les deux courants suivants:

— un courant 1 formé d'une solution aqueuse d'alcool polyvinylique, d'un catalyseur acide, d'un agent séquestrant,
— un courant 2 formé de l'aldéhyde butyrique,

et on introduit un agent tensio-actif dans le mélange réactionnel après avoir ajouté au moins 60% de l'alcool polyvinylique et au moins 50% de l'aldéhyde butyrique et de préférence après avoir achevé l'addition de ces ingrédients et après avoir porté la température entre 50°C et 100°C.

Le produit obtenu après neutralisation et séparation présente de gros grains. Ces grains se prêtent mal à la plastification et la feuille plastifiée est généralement trouble.

L'invention propose un nouveau procédé ayant un cycle de réaction court, économique en énergie, permettant d'obtenir une résine qui sous forme d'une feuille plastifiée possède un fluage élevé et est exempte de turbidité.

Conformément à l'invention, on introduit dans un milieu réactionnel, maintenu initialement à une température comprise entre 5°C et 20°C, comprenant un mélange d'eau et d'une partie de l'alcool polyvinylique réactionnel, la concentration en alcool polyvinylique du mélange étant comprise entre 2,5 et 7,5% en poids, le mélange étant présent en quantité suffisante pour permettre une agitation, simultanément et essentiellement pendant la même durée, un courant comprenant une solution aqueuse d'alcool polyvinylique correspondant à la partie complémentaire de l'alcool polyvinylique à utiliser dans la réaction et un courant comprenant l'aldéhyde butyrique, l'introduction des réactifs s'effectuant entre 30 et 120 minutes, et on réfrigère le mélange réactionnel durant les introductions pour que sa température ne dépasse pas 40°C, la réaction s'effectuant en présence d'un catalyseur acide et d'un agent émulsifiant, les quantités totales d'alcool polyvinylique et d'aldéhyde butyrique étant déterminées en fonction du taux d'hydroxyles désiré pour le produit final, ce taux étant de l'ordre de 20% en poids.

Sous un des aspects de l'invention, l'addition simultanée notamment du complément de l'alcool polyvinylique en solution aqueuse et de l'aldéhyde butyrique s'effectue dans un milieu réactionnel contenant un excès d'alcool polyvinylique par rapport à la quantité théorique pour obtenir un taux d'hydroxyles déterminé pour la produit final, cet excès étant inférieur à une quantité d'alcool polyvinylique correspondant à 7,5% en poids du milieu réactionnel.

Selon une caractéristique de l'invention, le milieu réactionnel initial contient de 2,5 à 7,5% en poids d'alcool polyvinylique. Une proportion trop faible d'alcool polyvinylique peut être la cause d'un produit trouble. A l'opposé, une proportion trop forte d'alcool polyvinylique peut être la cause d'une diminution du fluage.

Selon une caractéristique de l'invention, l'agent émulsifiant est introduit dans le même temps que les autres composants et, éventuellement, par le courant de l'alcool polyvinylique, en mélange avec celui-ci. Dans une variante, une partie ou la totalité de l'agent émulsifiant est placée dans le milieu réactionnel initial.

Selon une autre caractéristique de l'invention, le catalyseur acide est introduit dans le même temps que les autres composants et éventuellement, par le courant de l'alcool polyvinylique, en mélange avec celui-ci. Dans une autre variante, une partie du catalyseur acide est placée dans le milieu réactionnel initial.

Un autre avantage du procédé selon l'invention est qu'il ne nécessite pas le refroidissement de l'alcool polyvinylique comme c'est le cas lorsque celui-ci est placé en totalité dans le réacteur.

Lorsque l'addition des différents courants est terminée, le mélange réactionnel, dont la température s'est élevée légèrement par réaction exothermique, malgré la réfrigération, pour atteindre environ 20 à 30°C, selon notamment la vitesse d'introduction des réactifs, est laissé environ 30 mn à cette température de fin d'introduction. Le mélange réactionnel est ensuite porté dans un laps de temps compris entre 1 heure et 3 heures à une température de l'ordre de 70°C. Il est maintenu à cette température environ 1 heure avant d'être neutralisé, puis refroidi, lavé et séché.

Selon une caractéristique de l'invention, le milieu réactionnel initial comprend entre 1/10 et 1/3 de la totalité de l'alcool polyvinylique réactionnel.

Le catalyseur acide qui peut être introduit en mélange avec l'alcool polyvinylique ou, dans une variante, par un courant séparé, est un catalyseur usuel, connu pour les procédés de fabrication du polyvinylbutyral, comme par exemple l'acide chlorhydrique, l'acide sulfurique, un mélange de ces acides.

L'agent émulsifiant que peut également être introduit en mélange avec l'alcool polyvinylique ou, selon une variante, qui peut être placé partiellement ou en totalité dans le milieu réactionnel initial est par exemple le dodécylbenzène sulfonate, le lauryl sulfate, ou d'autres agents émulsifiants connus et utilisés pour la fabrication du polyvinylbutyral.

Les résines de polyvinylbutyral obtenues selon l'invention peuvent être plastifiées à l'aide des plastifiants connus pour le polyvinylbutyral. On peut citer par exemple des adipates de di-alkyles, des adipates mixtes d'alkyle et d'alkylaryle, des esters carboxyliques du glycol.

Le polyvinylbutyral (PVB) plastifié est obtenu par mélange de la résine de PVB avec le plastifiant. La quantité de plastifiant peut varier en fonction des propriétés désirées pour la PVB plastifié. On utilisé généralement le plastifiant dans des proportions telles que la teneur en plastifiant du PVB plastifié est comprise entre 10 et 65% en poids.

Le mélange peut s'effectuer d'après les méthodes classiques bien connues de l'homme de métier. On peut par exemple placer la résine de PVB dans un mélangeur et ajouter la quantité déterminée de plastifiant, progressivement et sous agitation. Le mélange peut s'effectuer à température ordinaire et durant 30 minutes environ, mais aussi à des températures plus élevées. On peut ainsi utiliser la méthode décrite dans la publication de brevet française 2 235 631 ou encore utiliser les mélangeurs décrits dans l'article paru dans la revue Les Techniques de l'Ingénieur (référence J 1930).

Après mélange, on obtient une masse que l'on peut extruder pour fabriquer des feuilles ayant par exemple une épaisseur de 0,76 mm. Ces feuilles sont utilisées comme couches intercalaires dans des vitrages feuilletés.

Les caractéristiques du polyvinylbutyral obtenu sont déterminées de la façon suivante:

Test de fluage en compression

On utilise pour ce test une presse à plateaux chauffants.

Un échantillon de feuille de polyvinylbutyral (PVB) ayant une épaisseur de 0,76 mm, est découpé à l'emporte-pièce sous forme d'un disque de 26 mm de diamètre. Le disque est placé entre deux lames de verre de 60×60 mm. L'ensemble est mis entre les plateaux maintenus à 125°C d'une presse chauffante. Après 5 min de préchauffage sans appliquer de pression, le composite est soumis pendant 5 min à une pression de 10 bars. Si D représente (à 0,25 mm près) le diamètre du disque de PVB pressé, le fluage est donné par la formule:

$$F = \frac{D-26}{26} \times 100$$

On considère que, pour l'application du PVB à la réalisation d'un vitrage feuilleté, le fluage en compression doit être au moins égal à 60%.

Pummel test (adhésivité aux feuilles de verre)

Les échantillons de verre feuilleté utilisés dans ce test et les suivants sont préparés comme suit. Une feuille de PVB de 0,76 mm d'épaisseur est préalablement conditionnée en humidité, placée entre deux feuilles de verre de 30,5×30,5×0,3 cm, le vitrage feuilleté étant alors placé sous une pression de 0,98 MPa (10 kg/cm²) à 138°C pendant 20 minutes. Ces échantillons sont découpées en deux fractions d'environ 15×30,5 cm qui sont conditionnées pendant 8 heures à −18°C. Ces fractions sont ensuite posées sur un support

incliné à 45° et frappées avec un marteau à tête plate de 0,450 kg jusqu'à ce que le verre soit pulvérisé. La surface d'essais pour une fraction est d'environ 10×15 cm et les coups de marteau sont répartis sur toute cette surface. La quantité de verre restant collée à la feuille de PVB est comparée à une échelle de normes "Pummel" notés de 0 à 10.

L'essai s'effectue sur les deux faces du vitrage feuilleté et le résultat s'exprime par conséquent par deux valeurs de l'échelle Pummel, déterminées de la manière suivante:

| % de surface de la feuille de PVB dont le verre s'est décollé lors de la casse | Valeurs Pummel |
|---|---|
| 100 | 0 |
| 95 | 1 |
| 85 | 3 |
| 60 | 4 |
| 40 | 5 |
| 20 | 6 |
| 10 | 7 |
| 5 | 8 |
| 2 | 9 |
| 0 | 10 |

On considère qu'un vitrage feuilleté ainsi testé est acceptable si les deux valeurs Pummel obtenues sont supérieures à 5.

Test de la chute de bille (résistance au choc)

Ces essai est effectué avec une bille d'acier d'un poids de 2,270 kg (5 livres britanniques), que l'on fait tomber sur la partie centrale d'un échantillon plan du vitrage feuilleté, reposant en position horizontale sur un cadre en bois. L'échantillon du vitrage feuilleté est formé de deux feuilles de verre de 30,5×30,5×0,3 cm et d'un intercalaire de 0,76 mm d'épaisseur.

Les échantillons sont à une température de 21°C (±2°C) et l'essai est conduit à des hauteurs croissantes de chute de la bille. On détermine la hauteur approximative, exprimée en pieds, pour laquelle plus de 90% des échantillons testés résistent au passage de la bille à travers le feuilleté.

Ce test est considéré comme positif lorsque cette hauteur approximative est supérieure ou égale à 5,18 mètres (17 pieds).

Test de détermination de la turbidité

Le "trouble" (ou "turbidité") d'une feuille transparente est défini comme étant le pourcentage du flux lumineux la traversant qui est dévié d'un angle supérieur à 2,5 degrés.

La mesure de la turbidité s'effectue conformément à la norme NF 54—111 (qui concorde largement avec la méthode A de la norme ASTM D 1002—61).

Pour les applications de PVB à la fabrication du verre feuilleté transparent, on considère comme acceptables des valeurs de la turbidité inférieures ou égales à 0,3%—0,4%.

Test de résistance à l'humidité

Des échantillons de vitrage feuilleté sont préparés en interposant un intercalaire plastifié de 0,76 mm entre deux plaques de verre de 30,5×30,5×0,30 cm. Ces échantillons sont placés dans de l'eau bouillante pendant deux heures et examinés ensuite pour déceler une éventuelle formation de bulles ou d'une bande blanche translucide à la périphérie des échantillons. L'absence de formation de bulles ou de bandes blanches translucides indique que le feuilleté a subi avec succès le test de résistance à l'humidité.

Des exemples de synthèse de polyvinylbutyral selon l'invention ainsi que des témoins sont décrits par la suite et leurs caractéristiques sont testées selon les méthodes décrites ci-dessus. Les exemples 1, 2, 6 à 8 sont des exemples comparatifs ne tombant pas sous la définition de l'invention.

Les trois premiers exemples montrent l'influence du milieu réactionnel initial pour obtenir un produit clair et un fluage élevé.

Exemple 1

Dans un réacteur de 500 l contenant un milieu réactionnel initial maintenu à 10°C, formé de 100 kg d'une solution d'alcool polyvinylique (PVA) à 10%, de 50 g de dodécylbenzène sulfonate (DBS) en tant qu'agent émulsifiant et de 135 g d'acide chlorhydrique de densité 1,18 en tant que catalyseur, on fait arriver en 90 minutes simultanément par trois courants séparés, 150 kg de la même solution de PVA maintenue à une température de 75°C, 14,05 kg d'aldéhyde butyrique maintenu à température ordinaire, et 206 g d'acide chlorhydrique de densité 1,18.

On observe une expansion du volume réactionnel deux heures après le début de la réaction puis vingt minutes plus tard la formation d'une suspension. Le produit est ensuite maintenu 30 minutes à la température observée puis porté en 75 minutes à 70°C, température à laquelle il est maintenu pendant une heure. On neutralise par 187 g de soude et on maintient la température pendant encore une heure. Le polyvinylbutyral (PVB) obtenu est ensuite refroidi, lavé plusieurs fois et séché.

La résine de PVB est ensuite plastifiée avec 38 parties d'adipate d'octyle et de benzyle (BOA) pour 100 parties de résine, puis extrudée sous forme d'une feuille de 0,76 mm d'épaisseur.

Les essais effectués sur la feuille de PVB fabriquée à partir de la résine ont donné les caractéristiques suivantes:

| Taux d'hydroxyles | 21,9% |
|---|---|
| Fluage | 54% |
| Chute de bille | 7,0 m (23 pieds) |
| Pummel | 8+9 |
| Turbidité | 0,33 |

Cet exemple montre qu'une trop forte concentration de PVA en fond de cuve est néfaste au fluage.

Exemple 2

Dans un réacteur de 500 l contenant un milieu réactionnel initial maintenu à 10°C formé de 100 litres d'eau et 50 g de DBS, on introduit simultanément en trois courants séparés, 150 kg d'une solution de PVA à 10% à la température de 75°C, 9,2 kg d'aldéhyde butyrique et 206 g d'acide chlorhydrique de densité 1,18. L'introduction des réactifs dure 90 minutes puis on laisse la réaction se poursuivre pendant 30 minutes à la température observée et la fin de la réaction est effectuée de manière identique à celle de l'exemple 1, sauf que l'on utilise 112 g de soude pour la neutralisation. La résine, lavée et séchée, puis transformée en feuille avec 38 parties de BOA pour 100 parties de résine donne un feuilleté dont les caractéristiques sont les suivantes:

| Taux d'hydroxyles | 15,3% |
|---|---|
| Fluage | 71% |
| Chute de bille | 19 pieds (5,8 m) |
| Pummel | 4+4 |
| Turbidité | 0,79 |

Cet exemple montre qu'en l'absence de PVA en fond de cuve, la produit présente une turbidité élevée.

Exemple 3

Dans un réacteur de 500 l contenant un milieu réactionnel initial formé de 50 l d'eau, de 50 kg d'une solution aqueuse de PVA à 10%, de 50 g de DBS et de 68 g d'acide chlorhydrique pur, on fait arriver simultanément par 3 courants séparés et durant 75 min, 150 kg d'une solution de PVA à 10% maintenue à 75°C durant l'addition 11,9 kg d'aldéhyde butyrique et 206 g d'acide chlorhydrique. Après addition, la température du mélange réactionnel, constamment refroidi, est d'environ 20°C. La suite des opérations se déroule ensuite comme dans l'exemple 1, la neutralisation étant faite avec 150 g de soude.

Les feuilletés obtenus à partir de la résine montrent les caractéristiques suivantes:

| Taux d'hydroxyles | 20,1% |
|---|---|
| Fluage | 73% |

| Chute de bille | 6,4 m (21 pieds) |
|---|---|
| Pummel | 4+6 |
| Turbidité | 0,29 |
| Granulométrie | 100 à 400 μm |

Cet exemple conforme à l'invention, montre qu'un fond de cuve contenant un mélange d'eau et de PVA en faibles proportions procure un fluage élevé et une faible turbidité.

Les exemples suivants montrent l'influence de la température du milieu réactionnel initial pour l'obtention de produits convenables, et aussi l'indépendance de la température de la solution de PVA que l'on additionne en cours de réaction.

Exemple 4

Dans un réacteur de 500 l, contenant un milieu réactionnel initial maintenu à 10°C, formé de 50 litres d'eau, 50 kg d'une solution aqueuse de PVA à 10% et 30 g de DBS, on fait arriver simultanément par trois courants séparés et durant 90 min, 150 kg d'une solution de PVA à 10% maintenue à 60°C durant l'addition, 8,25 kg d'aldéhyde butyrique et 206 g d'acide chlorhydrique. La suite de la réaction s'effectue comme dans l'exemple 1, la neutralisation étant faite avec 112 g de soude.

Les caractéristiques du produit obtenu sont les suivantes:

| Taux d'hydroxyles | 18,7% |
|---|---|
| Fluage | 65% |
| Chute de bille | 6,1 m (20 pieds) |
| Pummel | 8+9 |
| Turbidité | 0,30 |
| Granulométrie | 100 à 400 μm |

Exemple 5

On opère comme dans l'exemple 4 sauf que la température de la solution de PVA est maintenue à 50°C durant l'addition. Les caractéristiques du produit obtenu sont les suivantes:

| Taux d'hydroxyles | 19,3% |
|---|---|
| Fluage | 71 |
| Chute de bille | 6,7 m (22 pieds) |
| Pummel | 8+9 |
| Turbidité | 0,28 |
| Granulométrie | 100 à 400 μm |

Ces exemples 4 et 5 montrent que la température de la solution de PVA que l'on ajoute n'a pas d'influence sur les propriétés du PVB obtenu.

Exemple 6

La réaction est conduite de la même façon que dans l'exemple 3 sauf que la température du milieu réactionnel initial est de 20°C et que la température à la fin de l'introduction des réactifs est de 34°C malgré la réfrigération du mélange réactionnel.

Les caractéristiques du produit obtenu sont les suivantes:

| | |
|---|---|
| Taux d'hydroxyles | 20,9% |
| Fluage | 67 |
| Chute de bille | 6,7 m (22 pieds) |
| Pummel | 9+9 |
| Turbidité | 0,43 |
| Granulométrie | 500—1000 µm |

Exemple 7

La réaction est effectuée dans les mêmes conditions que dans l'exemple 6 sauf que la température du milieu réactionnel initial est de 40°C et elle atteint 50°C à la fin de l'introduction des réactifs.

Les caractéristiques du produit obtenu sont les suivantes:

| | |
|---|---|
| Taux d'hydroxyles | 18,1% |
| Fluage | 69 |
| Chute de bille | 5,2 m (17 pieds) |
| Pummel | 9+9 |
| Turbidité | 0,64 |
| Granulométrie | 2000—5000 µm |

Ces exemples 6 et 7 montrent l'influence de la température du milieu réactionnel initial sur la granulométrie. Les grains obtenus sont de plus en plus gros avec la température et ils se prêtent moins bien à la plastification. En outre, la turbidité est élevée. La température de 20°C du milieu réactionnel initial peut être considérée comme la température limite maximale permettant d'obtenir une résine acceptable.

Exemple 8

La réaction est effectuée dans les mêmes conditions que dans l'exemple 4 sauf que la température du milieu réactionnel initial est de 5°C. Après introduction des réactifs en 1 heure, la température du mélange réactionnel atteint 24°C.

Les caractéristiques du produit obtenu sont les suivantes:

| | |
|---|---|
| Taux d'hydroxyles | 14,2% |
| Fluage | 67 |
| Chute de bille | 5,2 m (17 pieds) |
| Pummel | 6+8 |
| Turbidité | 0,90 |
| Granulométrie | 100—400 µm |

Cet exemple montre qu'une température trop basse pour le milieu réactionnel initial conduit à une turbidité élevée.

Exemples 9 et 10

La réaction est effectuée comme dans l'exemple 3 sauf qu'on remplace le dodécylbenzène sulfonate (DBS) par un autre émulsifiant, à savoir le lauryl sulfate. Les quantités utilisées sont plus faibles et respectivement de 25 et 15 g. Les propriétés des produits obtenus sont semblables à celles de l'exemple 3.

Exemple 11

La réaction est effectuée comme dans l'exemple 3 sauf qu'on modifie le plastifiant, en remplaçant les 38 parties de BOA par 38 parties d'un mélange de BOA et d'adipate de di-n-hexyle, à raison de 70% en poids de BOA et 30% en poids d'adipate de di-n-hexyle.

Les propriétés du produit obtenu sont semblables à celles de l'exemple 3.

Exemple 12

La réaction est effectuée comme dans l'exemple 3 sauf qu'on utilise en tant que plastifiant 38 parties de di-n-heptanoate de triéthylène-glycol.

Les propriétés du produit obtenu sont semblables à celles de l'exemple 3.

**Revendications**

1. Procédé de préparation du polyvinylbutyral par réaction de l'alcool polyvinylique en solution aqueuse et de l'aldéhyde butyrique en présence d'un catalyseur acide et d'un agent émulsifiant, caractérisé en ce qu'on introduit dans un milieu réactionnel maintenu initialement à une température comprise entre 5°C et 20°C, comprenant un mélange d'eau et d'une partie de l'alcool polyvinylique réactionnel, la concentration en alcool polyvinylique du mélange étant comprise entre 2,5 et 7,5% en poids, le mélange étant présent en quantité suffisante pour permettre une agitation, simultanément, et essentiellement pendant la même durée, un courant comprenant une solution aqueuse d'alcool polyvinylique correspondant à la partie complémentaire de l'alcool polyvinylique à utiliser dans la réaction et un courant comprenant l'aldéhyde butyrique, l'introduction des réactifs s'effectuant entre 30 et 120 minutes, et en ce que le mélange réactionnel est réfrigéré durant ces introductions et que sa température ne dépasse pas 40°C.

2. Procédé selon la revendication 1, caractérisé en ce qu'au moins une partie du catalyseur acide est introduite en même temps que les autres réactifs.

3. Procédé selon la revendication 2, caractérisé en ce qu'au moins une partie du catalyseur acide est introduite en mélange dans la solution de l'alcool polyvinylique introduite en cours de réaction.

4. Procédé selon une des revendications 1 à 3, caractérisé en ce qu'au moins une partie de l'agent émulsifiant est introduite en cours de réaction en même temps que les autres réactifs.

5. Procédé selon la revendication 4, caractérisé en ce qu'au moins une partie de l'agent émulsifiant est introduite en mélange dans la solution de l'alcool polyvinylique introduite en cours de réaction.

6. Procédé selon une des revendications 1 à 5, caractérisé en ce que le milieu réactionnel initial comprend une quantité d'alcool polyvinylique comprise entre 1/10 et 1/3 de la totalité de l'alcool polyvinylique réactionnel.

7. Procédé selon une des revendications 1 à 6, caractérisé en ce que l'agent émulsifiant est choisi parmi le dodécylbenzène sulfonate et le lauryl sulfate.

8. Procédé selon une des revendications 1 à 7, caractérisé en ce que, à la fin de l'introduction de la solution d'alcool polyvinylique et de l'aldéhyde butyrique, le mélange réactionnel est maintenu durant 30 min environ à la température atteinte, inférieure à 40°C, puis, que ce mélange est porté dans un laps de temps compris entre 1 et 3 heures à une température de 70°C environ.

9. Polyvinylbutyral obtenu par la mise en oeuvre du procédé selon une des revendications 1 à 8.

10. Feuille de polyvinylbutyral plastifiée, caractérisée en ce qu'elle est formée à partir de polyvinylbutyral selon la revendication 9.

11. Vitrage feuilleté comprenant au moins une feuille de polyvinylbutyral selon la revendication 10.

**Patentansprüche**

1. Verfahren zur Aufbereitung von Polyvinylbutyral durch Reaktion von Polyvinylalkohol in wässriger Lösung und Butyraldehyd in Gegenwart eines sauren Katalysators und eines Emulgierungsmittels, dadurch gekennzeichnet, daß in ein Reaktionsmilieu, das anfänglich auf eine Temperatur zwischen 5°C und 20°C gehalten ist und eine Mischung aus Wasser und einem Teil des reaktiven Polyvinylalkohols enthält, wobei die Konzentration des Polyvinylalkohols der Mischung zwischen 2,5 und 7,5 Gew.-% beträgt und die Mischung in einer für eine Rührung ausreichenden Menge vorliegt, gleichzeitig und im wesentlichen während derselben Zeitdauer einen Strom enthaltend eine wässrige Lösung von Polyvinylalkohol entsprechend dem komplementären Teil des in der Reaktion zu verwendenden Polyvinylalkohols und einen Strom enthaltend Butyraldehyd über eine Zeitspanne zwischen 30 und 120 Minuten einführt und daß das Reaktionsgemisch während der Einströmung abgekühlt wird, so daß seine Temperatur 40°C nicht übersteigt.

2. Verfahren nach Anspruch 1, dadurch gekennzeichnet, daß mindestens ein Teil des sauren Katalysators zur selben Zeit wie die anderen Reagenzien eingeführt wird.

3. Verfahren nach Anspruch 2, dadurch gekennzeichnet, daß mindestens ein Teil des sauren Katalysators in Mischung in der im Laufe der Reaktion eingeführten Lösung von Polyvinylalkohol eingeführt wird.

4. Verfahren nach einem der Ansprüche 1 bis 3, dadurch gekennzeichnet, daß mindestens ein Teil des Emulgierungsmittels im Laufe der Reaktion zur selben Zeit wie die anderen Reagenzien eingeführt wird.

5. Verfahren nach Anspruch 4, dadurch gekennzeichnet, daß mindestens ein Teil des Emulgierungsmittels in Mischung in der im Laufe der Reaktion eingeführten Lösung aus Polyvinylalkohol eingeführt wird.

6. Verfahren nach einem der Ansprüche 1 bis 5, dadurch gekennzeichnet, daß das anfängliche Reaktionsmilieu eine Menge von Polyvinylalkohol enthält, die zwischen 1/10 und 1/3 des gesamten reaktiven Polyvinylalkohols beträgt.

7. Verfahren nach einem der Ansprüche 1 bis 6, dadurch gekennzeichnet, daß das Emulgierungsmittel gewählt ist aus Dodecylbenzolsulfonat und Laurylsulfat.

8. Verfahren nach einem der Ansprüche 1 bis 7, dadurch gekennzeichnet, daß am Ende der Eingabe der Lösung von Polyvinylalkohol und Butyraldehyd das Reaktionsgemisch während etwa 30 Minuten auf der erreichten Temperatur unterhalb von 40°C gehalten und die Mischung dann in einer Zeitspanne zwischen 1 und 3 Stunden auf eine Temperatur von etwa 70°C gebracht wird.

9. Polyvinylbutyral, hergestellt nach einem Verfahren nach einem der Ansprüche 1 bis 8.

10. Folie aus plastifiziertem Polyvinylbutyral, dadurch gekennzeichnet, daß sie aus Polyvinylbutyral nach Anspruch 9 gebildet ist.

11. Mehrschichtenglas enthaltend mindestens eine Schicht aus Polyvinylbutyral nach Anspruch 10.

**Claims**

1. A method of preparing polyvinylbutyral by reaction of polyvinyl alcohol in aqueous solution and butyric aldehyde in the presence of an acid catalyst and an emulsifying agent, characterised in that there is introduced, to a reaction medium held initially at a temperature from 5°C to 20°C comprising a mixture of water and a part of the polyvinyl alcohol, the concentration of polyvinyl alcohol in the mixture being from 2.5 to 7.5% by weight, the mixture being present in an amount sufficient to allow agitation, simultaneously and essentially over the same period, a stream comprising an aqueous solution of polyvinyl alcohol corresponding to the complementary part of the polyvinyl alcohol to be used in the reaction and a stream comprising butyric aldehyde, introduction of the reactants being carried out for from 30 to 120 minutes, in that the reaction mixture is cooled during these introductions and in that its temperature does not exceed 40°C.

2. A method according to claim 1, characterised in that at least a part of the acid catalyst is introduced at the same time as the other reactants.

3. A method according to claim 2, characterised in that at least a part of the acid catalyst is introduced to the mixture in the polyvinyl alcohol solution introduced during the reaction.

4. A method according to one of claims 1 to 3, characterised in that at least part of the emulsifying agent is introduced during the reaction at the same time as the other reagents.

5. A method according to claim 4, characterised in that at least part of the emulsifying agent is introduced to the mixture in the solution of polyvinyl alcohol introduced during the reaction.

6. A method according to one of claims 1 to 5, characterised in that the initial reaction medium comprises an amount of polyvinyl alcohol from 1/10 to 1/3 of the total amount of polyvinyl alcohol participating in the reaction.

7. A method according to one of claims 1 to 6, characterised in that the emulsifying agent is selected from dodecylbenzene sulfonate and lauryl sulfate.

8. A method according to one of claims 1 to 7, characterised in that at the end of introduction of the solution of polyvinyl alcohol and butyric aldehyde, the reaction mixture is held for about 30 minutes at the temperature reached, less than 40°C, and the mixture is then brought during a period from 1 to 3 hours to a temperature of about 70°C.

9. Polyvinylbutyral obtained by a method according to any one of claims 1 to 8.

10. A sheet of plasticised polyvinylbutyral, characterised in that it is formed from polyvinylbutyral according to claim 9.

11. A laminated pane comprising at least one sheet of polyvinylbutyral according to claim 10.